Europäisches Patentamt

European Patent Office

Office européen des brevets

(11) Veröffentlichungsnummer: **0 260 686 B1**

# EUROPÄISCHE PATENTSCHRIFT

(45) Veröffentlichungstag der Patentschrift: **26.06.91**

(21) Anmeldenummer: **87113591.9**

(22) Anmeldetag: **17.09.87**

(51) Int. Cl.5: **C08L 67/06**, C08K 5/13,
C08K 5/50, C08K 5/52,
C08K 3/24, C08K 5/09

(54) **Lagerstabile Formmassen auf Basis von härtbaren ungesättigten Polyesterharzen.**

(30) Priorität: **19.09.86 DE 3631838**

(43) Veröffentlichungstag der Anmeldung:
**23.03.88 Patentblatt 88/12**

(45) Bekanntmachung des Hinweises auf die
Patenterteilung:
**26.06.91 Patentblatt 91/26**

(84) Benannte Vertragsstaaten:
**AT BE CH DE ES FR GB IT LI NL SE**

(56) Entgegenhaltungen:
AT-A- 294 426          BE-A- 666 944
BE-A- 667 359          DD-A- 2 001 366
DE-B- 1 098 712        US-A- 3 028 360
US-A- 3 360 589        US-A- 3 627 657

Kunstoff-Handbuch, Bd.VIII, S. 271-272, Carl-Hanser Verlag, 1973

Encyclopedia of Polymer Science and Engineering, Vol. 12, Seite 261-262; Ed. John Wiley & Sons (1988)

(73) Patentinhaber: **BASF Aktiengesellschaft
Carl-Bosch-Strasse 38
W-6700 Ludwigshafen(DE)**

(72) Erfinder: **Holoch, Jan, Dr.
Helaweg 11
W-6900 Heidelberg(DE)**
Erfinder: **Guthmann, Alfred, Dr.
Duerkheimer Strasse 33
W-6520 Worms 1(DE)**
Erfinder: **Christoph, Hans-Juergen, Dr.
Hauffstrasse 45
W-3502 Vellmar(DE)**
Erfinder: **Kemper, Heinz Bernhard, Dr.
Wigandstrasse 15 a
W-3500 Kassel(DE)**

## Beschreibung

Die Erfindung betrifft lagerstabile Harzmassen auf Basis von ungesättigten Polyestern mit Maleinsäureendgruppen, copolymerisierbaren Monomeren, sowie einer hochwirksamen Kombination von Inhibitoren.

Härtbare ungesättigte Polyesterharze neigen beim Lagern zu vorzeitigem Gelieren, auch wenn sie keine oder nur bei verhältnismäßig hohen Temperaturen zerfallende Peroxid-Initiatoren enthalten. Zur Verlängerung der Lagerstabilität setzt man den Harzmassen daher Inhibitoren, meist auf Basis von Hydrochinonderivaten, zu. Damit erreicht man bei üblichen Polyesterharzen Lagerzeiten von mehr als einem halben Jahr.

Nach der DL-PS 2 001 366 wird die Lagerstabilität auch bei höheren Temperaturen über einen längeren Zeitraum hinweg durch den Zusatz von phenolischen Inhibitoren zusammen mit Estern der phosphorigen Säure bewirkt. Aus US-A-3627657 ist eine Kombination von Hydrochinon, Estern der phosphorigen Säure und Spuren eines Salzes von zweiwertigem Kupfer als Inhibitor des vorzeitigen Gelierens bei ungesättigten Polyesterharzen bekannt, wobei die Lagerstabilität der Harze bei Zusatz von mehr als 0.5 ppm $Cu^{++}$ abnimmt.

Besonders gravierend ist das Problem des vorzeitigen Gelierens bei Harzmassen auf Basis von ungesättigten Polyestern mit endständigen Maleinsäuregruppen. Derartige Harze zeichnen sich dadurch aus, daß man aus ihnen ausgehärtete Formkörper mit besonders guten mechanischen Eigenschaften herstellen kann; andererseits kann sich aus endständigen Maleinsäuregruppen durch Ester-Rückspaltung in einer Gleichgewichtsreaktion Maleinsäureanhydrid bilden, das mit monomerem Styrol zusammen einen Charge-Transfer-Komplex bildet, welcher vermutlich die vorzeitige Polymerisation initiiert. Diese Rückspaltung ist bei Fumarsäureendgruppen nicht möglich, da Fumarsäure unter ähnlichen Bedingungen kein Anhydrid bildet. Übliche ungesättigte Polyester enthalten jedoch neben Hydroxylendgruppen fast ausschließlich Fumarsäureendgruppen, da bei den üblichen hohen Polykondensationstemperaturen (über 160°C) die eingesetzte Maleinsäure zu etwa 95 % zu Fumarsäure isomerisiert. Ein Polyester, der aus Maleinsäureanhydrid und einem Glykol hergestellt wurde, enthält z.B. nur etwa 2,5 % Maleinsäureendgruppen.

Der Erfindung lag daher die Aufgabe zugrunde, die Lagerstabilität von Harzmassen auf Basis von ungesättigten Polyestern mit mehr als 10 % Maleinsäureendgruppen, bezogen auf die Gesamtzahl der Endgruppen, zu verbessern.

Diese Aufgabe wird erfindungsgemäß gelöst durch die gemeinsame Verwendung von üblichen phenolischen Inhibitoren, einem Phosphin oder Ester der phosphorigen Säure und 5 bis 200 ppm $Li^+$ oder $Cu^{++}$ in Form eines im Harz löslichen Salzes oder Komplexes.

Gegenstand der Erfindung sind demzufolge lagerstabile Formmassen aus

A. einem ungesättigten Polyester, der mehr als 10 %, vorzugsweise mehr als 30 % Maleinsäure-Endgruppen aufweist.

B. copolymerisierbaren Monomeren,

C. üblichen Zusatzstoffen und Hilfsmitteln,

D. 50-1000 ppm, bezogen auf A + B, eines Phenols oder Chinons,

E. 100-20.000 ppm, bezogen auf A + B, eines Phosphins oder Esters der phosphorigen Säure, sowie

F. 5-200 ppm, bezogen auf A + B, $Li^+$ oder $Cu^{++}$ in Form eines im Harz A + B löslichen Salzes oder Komplexes.

Zu den einzelnen Komponenten ist folgendes zu sagen:

A Ungesättigte Polyester mit Maleinsäureendgruppen erhält man durch einen Mehrstufenprozeß. Zunächst wird in bekannter Weise ein gesättigter oder ungesättigter Polyester durch Polykondensation von Dicarbonsäuren und Diglykolen hergestellt. Dieses erfolgt nach üblichen Verfahrensweisen (Schmelzkondensation, Auskreisen, einstufige-und mehrstufige Fahrweise, Zusatz von Veresterungskatalysatoren, Umesterung, z.B. von Terephthalsäuredimethylester). Die Kondensation wird bis zu einer geringen Säurezahl durchgeführt (SZ <50, bevorzugt: SZ <20). Die Hydroxylzahl des Polyesters wird bestimmt und daraus die Anzahl der freien Hydroxylgruppen errechnet. Bei tiefen Temperaturen (unterhalb von ~ 140°C) werden die freien Hydroxylgruppen dann vollständig oder teilweise mit Maleinsäureanhydrid umgesetzt. Die Reaktion erfolgt spontan und ist nach einigen Stunden abgeschlossen. Bei dieser verhältnismäßig niedrigen Temperatur wird Maleinsäurehalbester kaum noch zu Fumarsäurehalbester isomerisiert, man erhält also je nach der eingesetzten Menge Maleinsäureanhydrid ungesättigte Polyester mit 10-100 % Maleinsäureendgruppen.

Ist bei der Umsetzung mit Maleinsäureanhydrid ein Lösungsmittel zugegeben, das die Viskosität herabsetzt, dann ist die Reaktion der freien Hydroxylgruppen mit Maleinsäureanhydrid bei noch tieferen Temperaturen möglich (um 70°C). Soll ein ungesättigter Polyester mit einem hohen Anteil an Maleinsäureendgruppen hergestellt werden, so wird während der Kondensation ein Glykolüberschuß verwendet,

2

um einen hydroxylterminierten Polyester zu erhalten.

Geeignete Ausgangspolyester sind die üblichen Polykondensationsprodukte aus mehrwertigen, insbesondere zweiwertigen Carbonsäuren und deren veresterbaren Derivaten, insbesondere Anhydriden, die mit mehrwertigen, insbesondere zweiwertigen Alkoholen esterartig verknüpft sind, und gegebenenfalls zusätzlich Reste einwertiger Carbonsäuren und/oder Reste einwertiger Alkohole und/oder Reste von Hydroxycarbonsäuren enthalten.

Wenn die eingesetzten zweiwertigen Carbonsäuren ungesättigt sind, dann erhält man nach der Umsetzung mit Maleinsäureanhydrid ungesättigte Polyester, die neben den endständigen Maleinsäuregruppen zusätzlich mittelständige Malein- und Fumarsäuregruppen enthalten.

B. Als copolymerisierbare, ethylenisch ungesättigte monomere Verbindungen kommen die üblicherweise zum Herstellen ungesättigter Polyesterharze verwendeten Allyl- und vorzugsweise Vinylverbindungen in Frage, wobei Styrol bevorzugt ist. Die Komponente B ist in den Polyesterformmassen im allgemeinen in einer Menge von 10 bis 80, vorzugsweise von 20 bis 70 Gew.%, bezogen auf das Gesamtgewicht A + B enthalten.

C. Übliche Zusatzstoffe und Hilfsmittel sind z.B. Verstärkungs- und Füllstoffe, wie Glasfasern, Kohlenstoffasern und organische Fasern als Roving, Matten oder Gewebe, Glaskugeln, Glasmikrohohlkugeln, Aluminiumhydroxid, Siliciumdioxid, Kreide, Talkum, Sand und Holzmehl; Pigmente, wie Titandioxid, Verdickungsmittel, wie Magnesiumoxid oder Polyisocyanate; schrumpfmindernde Zusätze, wie Polystyrol, Polyvinylacetat oder Polymethylmethacrylat; Elastifiziermittel, wie Polyurethane oder Dienkautschuke; Flammschutzadditive, wie Decabromdiphenylether und Chlorparaffin; ferner Thixotropiermittel, Gleitmittel und Lösungsmittel.

Schließlich können die Formmassen die üblichen Initiatoren enthalten, wobei für die Warmhärtung bei hohen Temperaturen zerfallende Peroxide, für die Kalthärtung bei niedrigen Temperaturen zerfallende Peroxide in Kombination mit Kobalt- oder Amin-Beschleunigern und für die Lichthärtung Photoinitiatoren, wie Benzilketale, Benzoinether, Acylphosphinoxide oder Disulfide, vorzugsweise in Mengen von 0,1 bei 1 Gew.%, bezogen auf A + B, in Frage kommen.

D. Geeignete phenolische Inhibitoren sind z.B. Hydrochinon, Methylhydrochinon, Dimethyl- und Trimethylhydrochinone. Ferner sind Chinon und Chinonderivate geeignet. Sie werden in Mengen von 50 bis 1000 ppm, vorzugsweise 100 bis 500 ppm, bezogen auf das Gewicht von A + B, eingesetzt.

E. Komponente E sind organische Ester der phosphorigen Säure und organische Phosphine, z.B. Triphenylphosphin, Tributylphosphin, Tri-p-toluylphosphin, Trimethylphosphit, Triethylphosphit, Triisopropylphosphit und Triphenylphosphit.

Sie werden in Mengen von 100 bis 20.000 ppm, Ester der phosphorigen Säure vorzugsweise in Mengen von 1000-10.000 ppm und Phosphine vorzugsweise in Mengen von 200-1000 ppm, bezogen auf das Gewicht von A + B, eingesetzt.

F. Die erfindungsgemäßen lagerstabilen Formmassen enthalten 5 bis 200 ppm, vorzugsweise 5 bis 50 ppm, bezogen auf das Gewicht von A + B, $Li^+$ oder $Cu^{++}$ in Form eines im Harz A + B löslichen, vorzugsweise organischen Salzes oder Komplexes. Bevorzugte Salze bzw. Komplexe sind Lithiumchlorid, Kupfernaphthenat, Kupferoktoat und Kupferacetylacetonat. Besonders bevorzugt ist eine Lösung von Soligen-Kuper (Kupfernaphthenat) in Styrol mit 1 % $Cu^{++}$.

Die erfindungsgemäßen Formmassen weisen eine gute Lagerstabilität auf. Sie können nach den üblichen Methoden, ggf. nach Zusatz von Initiatoren durch Kalthärtung, Warmhärtung oder Lichthärtung in Formkörper mit sehr guten mechanischen Eigenschaften überführt werden.

Ein spezieller Vorteil der bevorzugten Inhibitorkombination aus Hydrochinon, Triphenylphosphin und Kupfernaphthenat besteht darin, daß dadurch auch die Kalthärtung mit Methylethylketonperoxid und Kobaltnaphthenat beschleunigt wird.

Die in den Beispielen genannten Teile und Prozente beziehen sich auf das Gewicht.


Beispiel 1


Elastische Beschichtungsmasse auf Basis eines ungesättigten Polyesters mit ca. 95 % endständigen Maleinsäuregruppen

a) Herstellung des ungesättigten Polyesterharzes

416 Teile Neopentylglykol und 438 Teile Adipinsäure werden unter Rühren und Darüberleiten von Stickstoff innerhalb von 20 Stunden bei 190° C bis zu einer Säurezahl von 10 verestert. Die Kesseltemperatur wird auf 140° C gesenkt, und 98 Teile Maleinsäureanhydrid werden hinzugefügt. Bei dieser Temperatur wird weitere drei Stunden gerührt. 800 Teile des ungesättigten Polyesters werden nach Zusatz von 0,13 Teilen Hydrochinon unterhalb von 120° C in 430 Teilen Styrol gelöst.

b) Herstellung der elastifizierenden Polyurethankomponente B

1000 Teile eines Präpolymerisats aus Isophoron-diisocyanat mit 1,4-Butandiol mit einem Gehalt von 15 bis 17 Prozent freie Isocyanatgruppen und einem mittleren Molekulargewicht von 250 werden mit 2716 Teilen Polytetramethylenetherglykol vom Molekulargewicht 950-1000 in Gegenwart von Dibutylzinndilaurat als Reaktionsbeschleuniger in 60 prozentiger Lösung in Styrol umgesetzt. Nach Prüfung des Restgehaltes an Isocyanatgruppen wird eine Absättigung der freien Isocyanatgruppen mit der notwendigen Menge Amin (H-Äquivalentgewicht 120-200), 20 prozentig in Styrol, vorgenommen.

c) Herstellung der Beschichtungsmasse

1000 Teile Polyesterharz a), 300 Teile Polyurethankomponente b), 200 Teile Aluminiumhydroxid, 50 Teile Titandioxid (Rutilpigment), 20 Teile Paraffin, 5 Teile Thixotropiermittel und 0,2 Teile Hydrochinon werden in stark scherenden Mischern gründlich durchmischt.

Der Beschichtungsmasse werden weitere Inhibitoren zugesetzt. Lagerstabilitäten wurden in Weißblechdosen (80 % gefüllt) bei 70 °C gemessen.

| Versuch | Zusätzliche Inhibitoren | Lagerstabilität (70°C) (d) |
|---|---|---|
| 1 | - | 9 |
| 2 | 0,14 % Soligen-Kupfer (mit 1 % Cu) | 12 |
| 3 | 1 % Triphenylphosphit | 10 |
| 4 | 1 % Triphenylphosphit + 0,14 % Soligen-Kupfer (mit 1 % Cu) | >59 |
| 5 | 0,2 % LiCl (in Ethanol; 1,6 % Li) | 11 |
| 6 | 1 % Triphenylphosphit + 0,2 % LiCl (in Ethanol; 1,6 % Li) | >59 |

Die Versuche 4 und 6 sind erfindungsgemäß

Beispiel 2

Ungesättigtes Polyesterharz mit ca. 53 % Maleinsäureendgruppen, das zusätzlich mittelständige Doppelbindungen enthält

392 Teile Maleinsäureanhydrid, 1184 Teile Phthalsäureanhydrid und 1034 Teile Propylenglykol werden unter Rühren und Darüberleiten von Stickstoff innerhalb von 15 Stunden bei 200 °C bis zu einer Säurezahl von 25 und einer Hydroxylzahl von 60 verestert. Die Temperatur wird auf 140 °C gesenkt und 196 Teile Maleinsäureanhydrid und 0,23 Teile Hydrochinon werden hinzugefügt. Anschließend wird drei Stunden bei dieser Temperatur gerührt. 2300 Teile dieses ungesättigten Polyesters werden nach Zusatz von 0,16 Teilen Hydrochinon in 1346 Teilen Styrol gelöst. Die Lagerstabilitäten wurden nach Zusatz weiterer Inhibitoren bei 80 °C in Glasampullen (80 % gefüllt) geprüft.

4

EP 0 260 686 B1

| Versuch | Zusätzliche Inhibitoren | Lagerstabilität (80°C) (h) |
|---------|-------------------------|----------------------------|
| 1 | - | 1,5 |
| 2 | 0,1 % Triphenylphosphin | 1,5 |
| 3 | 1 % Triphenylphosphit | 3 |
| 4 | 0,1 % Triphenylphosphin + 0,14 % Soligen-Eisen (1 % Fe) | 5 |
| 5 | 1 % Triphenylphosphit + 0,14 % Soligen-Eisen (1 % Fe) | 11 |
| 6 | 0,1 % Triphenylphosphin + 0,14 % Soligen-Kupfer (1 % Cu) | 42 |
| 7 | 1 % Triphenylphosphit + 0,14 % Soligen-Kupfer (1 % Cu) | 80 |

Die Versuche 6 und 7 sind erfindungsgemäß. Sie zeigen die Überlegenheit von Kupfer gegenüber Eisen als Kation.

Härtungen wurden mit 2 % Methylethylketonperoxid (MEKP-LA 3) und 0,2 % Kobaltnaphthenat (1 % Co) durchgeführt. Es wurden die Zeit für den Temperaturanstieg von 25 auf 35 °C (Gelierzeit, GZ), die Zeit bis zum Temperaturmaximum (Härtungszeit, HZ) und die maximale Temperatur ($t_{max}$) gemessen.

| Zusätzliche Inhibitoren | GZ (min) | HZ (min) | $t_{max}$ (°C) |
|-------------------------|----------|----------|----------------|
| - | 32 | 57 | 85 |
| 0,1 % Triphenylphosphin + 0,14 % Soligen-Kupfer (1 % Cu) | 23 | 41 | 110 |

## Ansprüche

1. Lagerstabile Formmassen aus
   A. einem ungesättigten Polyester, der bezogen auf die Gesamtzahl der Endgruppen mehr als 10% Maleinsäure-Endgruppen aufweist,
   B. copolymerisierbaren Monomeren,
   C. üblichen Zusatzstoffen und Hilfsmitteln,
   D. 50 - 1000 ppm, bezogen auf A + B, eines Phenols oder Chinons,

EP 0 260 686 B1

E. 100 - 20.000 ppm, bezogen auf A + B eines Phosphins oder Esters der phosphorigen Säure, gekennzeichnet durch einen Gehalt von

F. 5 - 200 ppm, bezogen auf A + B, $Li^+$ oder $Cu^{++}$ in Form eines im Harz A + B löslichen Salzes oder Komplexes.

2. Formmassen nach Anspruch 1, dadurch gekennzeichnet, daß Komponente F zweiwertiges Kupfer ist.

3. Verfahren zur Herstellung von Formkörpern durch Kalthärtung der Formmassen nach Anspruch 1, dadurch gekennzeichnet, daß man den Formmassen übliche, bei niedrigen Temperaturen zerfallende Peroxide, sowie übliche Beschleuniger, vorzugsweise Amine oder Kobalt-Verbindungen zusetzt, und die Härtung bei Temperaturen unterhalb von 100° C durchführt.

4. Verfahren zur Herstellung von Formkörpern durch Heißhärtung der Formmassen nach Anspruch 1, dadurch gekennzeichnet, daß man die Formmassen, die übliche, bei hohen Temperaturen zerfallende Peroxide enthalten, bei Temperaturen oberhalb von 100° C aushärtet.

5. Verfahren zur Herstellung von Formkörpern durch Lichthärtung der Formmassen nach Anspruch 1, dadurch gekennzeichnet, daß man die einen Photoinitiator enthaltenden Formmassen durch Bestrahlung aushärtet.

## Claims

1. A molding material having a long shelf life and consisting of
   A. an unsaturated polyester which contains more than 10%, based on the total number of terminal groups, of terminal maleic acid groups,
   B. copolymerizable monomers,
   C. conventional additives and assistants,
   D. 50-1,000 ppm, based on A + B, of a phenol or quinone, and
   E. 100-20,000 ppm, based on A + B, of a phosphine or an ester of phosphorous acid,
   which contains
   F. 5-200 ppm, based on A + B, of $Li^+$ or $Cu^{++}$ in the form of a salt or complex which is soluble in the resin A + B.

2. A molding material as claimed in claim 1, wherein component F is divalent copper.

3. A process for the production of moldings by cold-curing a molding material as claimed in claim 1, wherein conventional peroxides which decompose at low temperatures and conventional accelerators, preferably amines or cobalt compounds, are added to the molding material, and curing is carried out at below 100° C.

4. A process for the production of moldings by heat-curing a molding material as claimed in claim 1, wherein the molding material which contains conventional peroxides which decompose at high temperatures is cured at above 100° C.

5. A process for the production of moldings by photo-curing a molding material as claimed in claim 1, wherein the photoinitiator-containing molding material is cured by irradiation.

## Revendications

1. Matières à mouler, stables à la conservation, constituées
   A. d'un polyester insaturé qui, par rapport au nombre total des radicaux terminaux, présente plus de 10% de radicaux acide maléique terminaux,
   B. de monomères copolymérisables,
   C. d'adjuvants et d'additifs usuels,
   D. de 50 à 1000 ppm, par rapport à A + B, d'un phénol ou d'un quinone,
   E. de 100 à 20.000 ppm, par rapport à A + B, d'une phosphine ou d'un ester de l'acide phosphoreux, caractérisées par une teneur
   F. de 5 à 20 ppm, par rapport à A + B, de $Li^+$ ou de $Cu^{++}$, sous forme d'un complexe ou d'un sel soluble dans la résine A + B.

2. Matières à mouler selon la revendication 1, caractérisées en ce que le composant F est le cuivre divalent.

3. Procédé de fabrication de corps moulés par durcissement à froid des matières à mouler selon la revendication 1, caractérisé en ce que l'on ajoute aux matières à mouler des peroxydes qui se décomposent à de basses températures, usuels, comme aussi des accélérateurs, de préférence des amines ou des composés du cobalt et on entreprend le durcissement à des températures inférieures à 100° C.

4. Procédé de fabrication de corps moulés par durcissement à chaud des matières à mouler selon la revendication 1, caractérisé en ce que l'on durcit les matières à mouler qui contiennent des peroxydes qui se décomposent à des températures élevées, usuels, à des températures supérieures à 100° C.

5. Procédé de fabrication de corps moulés par durcissement à la lumière des matières à mouler selon la revendication 1, caractérisé en ce que l'on durcit les matières à mouler qui contiennent un photo-amorceur par irradiation.